(19) Europäisches Patentamt / European Patent Office / Office européen des brevets

(11) **EP 4 310 716 A1**

(12) **EUROPEAN PATENT APPLICATION**

(43) Date of publication:
**24.01.2024  Bulletin 2024/04**

(21) Application number: **22213351.4**

(22) Date of filing: **14.12.2022**

(51) International Patent Classification (IPC):
**G06F 30/27** (2020.01)     **G06F 30/28** (2020.01)
**G06F 111/06** (2020.01)     **G06F 119/08** (2020.01)

(52) Cooperative Patent Classification (CPC):
**G06F 30/27; B29C 64/386; G06F 30/28;**
G06F 2111/06; G06F 2119/08

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.07.2022  US 202263390800 P**

(71) Applicant: **Covestro LLC**
**Pittsburgh, PA 15205 (US)**

(72) Inventors:
• **MILLER, Carson**
**Pittsburgh, 15222 (US)**
• **LORENZO, Jim**
**Mars, 16046 (US)**
• **CONNOR, Emily**
**Canonsburg, 15317 (US)**
• **STEPPAN, David**
**Gibsonia, 15044-6041 (US)**
• **PIKE, Timothy**
**Bethel Park, 15102-1534 (US)**
• **FINNEGAN, Natalie**
**Pittsburgh, 15212 (US)**

(74) Representative: **Levpat**
**c/o Covestro AG**
**Gebäude K12**
**51365 Leverkusen (DE)**

(54) **METHODS FOR CREATING A HEAT SINK DESIGN**

(57)     A method or system of creating a design for a heat sink comprising receiving: property inputs from a user, including either target physical dimensions for the heat sink including its material of construction, or the maximum temperature of an electrical element adjacent to the heat sink, along with the power level for the electrical element; calculating a predicted temperature of the electrical element; generating first comparisons showing the impact of independently changing each of the at least four property inputs and the resulting change to the predicted temperature of the electrical element; generating a second comparison showing the effect of independently changing each of the at least two physical dimensions upon the predicted temperature of the electrical element; generating a third comparison showing the effect of changing the material of construction upon the predicted temperature of the electrical element; allowing the user to change a property input after the comparisons are generated; selecting a design for the heat sink; and creating design specifications to manufacture the heat sink.

EP 4 310 716 A1

**Description**

**BACKGROUND**

**Field**

This disclosure relates to methods and systems for creating a design for a heat sink to dissipate heat from an electrical component and, in a non-limiting embodiment, manufacturing the heat sink.

**Description of Related Art**

Heat sinks are used in association with electrical components, such as lights. During the operation of the electrical components, heat is generated, resulting from the technology of the electrical component, material and power that is used. While the heat is usually an unwanted side effect of the electrical component, its generation does not always require a heat sink. However, with more electrical components and materials placed in a smaller area, heat sinks are often used and relied upon to prevent heat buildup that may damage the electrical components. Thus, heat sinks are often needed when used in association with such electrical components.

The existing methods for designing heat sinks can be time-consuming and resource intensive. First, an application analysis is performed, wherein the cooling needs are determined from the expected power output of the device. Computer-aided design (CAD) is known to be used to design a heat sink. Then, simulations are run using computational fluid dynamics (CFD) and a subsequent analysis, which can take several hours to complete. Based on the results of the analysis, it may be determined that the heat sink design either overperformed, resulting in a waste or misuse of resources, or it underperformed, making the heat sink unacceptable for that application. Then, the designer must predict what modifications must be made to the design, and repeat the process, with another CFD simulation and subsequent analysis. If the results are determined to again either overperform or underperform, then modifications are made to the design, and the iterative CFD simulation, analysis and modification to the CAD design continues. Once the performance of the heat sink is determined to be acceptable, there may also be another step to optimize the design. For example, an aluminum plate may be added, or removed from the design, and the CFD simulation and analysis steps are performed once again. When a design a finalized, then the user must determine how it may be manufactured.

In addition, newer techniques and materials are now available that can improve the design of heat sinks. This combination of new techniques and materials gives rise to new methods and systems to design and manufacture heat sinks more efficiently, in a shorter period of time, and in an integrated manner to both design and manufacture a heat sink.

**SUMMARY**

One aspect of the present invention pertains to a method of creating a design for a heat sink comprising: receiving, via a user interface, (i) at least one power level for an electrical element adjacent to the heat sink, and (ii) a maximum acceptable application temperature for the electrical element; calculating, with at least one processor, a modified heat sink design, based on the power level and maximum acceptable temperature inputted by the user, and also based on a standard heat sink design having standard physical dimensions, including a heat sink size, number of fins, fin height and fin spacing, wherein the modified heat sink design has physical dimensions that are changed from the standard design to allow for the input maximum temperature and power level, given a fixed heat sink size, and a thermal conductivity of a thermally conductive polymeric composition of which the heat sink is constructed; generating, with at least one processor, between zero and five first comparisons, each first comparison showing the impact of independently changing each of at least two physical dimensions, the power level inputted by the user, and at least one thermal conductivity of a thermally conductive polymeric composition of which the heat sink is constructed; generating, with at least one processor, a second comparison showing the effect of independently changing at least two physical dimensions upon the predicted temperature of the electrical element; generating, with at least one processor, a third comparison showing the effect of changing the material of construction upon the predicted temperature of the electrical element; allowing the user to change at least one of the physical dimensions, the power level, or the thermal conductivity after each of the above comparisons are generated; the user selecting a design for the heat sink having at least two physical dimensions and a material of construction, after being shown the predicted temperature of the electrical element via the user interface; and creating design specifications to manufacture the heat sink.

Another aspect of the present invention pertains to a system of creating a design for a heat sink, comprising a user interface, configured to receive at least four property inputs from a user, the property inputs comprising (i) at least two target physical dimensions for the heat sink, (ii) at least one power level for an electrical element adjacent to the heat sink, and (iii) at least one thermal conductivity of a thermally conductive polymeric composition, of which the heat sink is constructed; at least one processor, configured to calculate a predicted temperature of the electrical element, based on the at least four property inputs; at least one processor, configured to generate between zero and five first comparisons, each first comparison showing the impact of independently changing each of the at least four property inputs and the resulting change to a predicted temperature of the electrical element; at least one processor, configured to generate a second comparison showing the effect of independently changing each of the at least two physical dimensions upon the predicted temperature of the electrical element; at least one processor, configured to generate a third comparison showing the effect of changing the material of construction upon the predicted temperature of the electrical element; allowing the user to change at least one of the at least four property inputs after each of the above comparisons are generated; further allowing the user selecting a design for the heat sink having at least two target physical dimensions and a material of construction, after being shown the predicted temperature of the electrical element via the user interface; and further allowing the user to create design specifications to manufacture the heat sink.

In other embodiments, the property inputs are selected from the group consisting of number of fins, fin height, fin spacing and heat spreader thickness. In yet another, the property inputs comprise at least three target physical dimensions for a heat sink product, and the user selecting a design for a heat sink having at least three target physical dimensions and a material of construction. In another embodiment, the fixed heat sink size comprises a fixed heat sink diameter and a fixed heat sink thickness.

In a different embodiment, calculating a predicted temperature of the electrical element uses a neural network model, prepared with a training set and validation set of prior CFD simulations, to optimize the proposed heat sink design based upon the property inputs, or to compare possible heat sink designs and choices of materials with the inputted design parameters to optimize the proposed heat sink design based on a predicted weight of the heat sink.

In other embodiments, each of the zero to five first comparisons are selected from the group consisting of tables and line graphs. The method may further comprise generating, with at least one processor, three, four or five first comparisons, each first comparison showing the impact of independently changing each of the at least four property inputs and the resulting change to a predicted temperature of the electrical element. The second comparison may be a heat map, and the predicted temperature of the electrical element may be shown in a color in the heat map, the color changing with a change in predicted temperature.

In another embodiment not yet disclosed, the method further comprises: the user changing at least one property input; and recalculating, with at least one processor, based on the changed input. In another, the user changes the at least one property input by moving a point in a line graph or a heat map of the first comparison or the second comparison to represent a change in the at least one property input. In yet another embodiment, the method further comprises: regenerating at least one of the first comparison, second comparison and third comparison, based upon the changed input.

In more embodiments, the method further comprises sending the design specification to manufacture the heat sink to an injection molding machine, a 3-D printer, or an external molder.

These and other features and characteristics of the present invention, as well as the methods of operation and functions of the related elements of structures and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the invention. As used in the specification and the claims, the singular form of "a," "an," and "the" include plural referents unless the context clearly dictates otherwise.

## BRIEF DESCRIPTION OF THE DRAWINGS

Additional advantages and details are explained in greater detail below with reference to the exemplary embodiments that are illustrated in the accompanying schematic figures, in which:

FIG. 1 is a schematic view of a system for creating a heat sink design;
FIG. 2 is a schematic view of a another system for creating a heat sink design;
FIG. 3 is a schematic view of a neural network; and
FIGS. 4-6 are various schematic views of comparisons and user interfaces for creating a heat sink design.

## DETAILED DESCRIPTION

As used herein, the term "computing device" may refer to one or more electronic devices that are configured to directly or indirectly communicate with or over one or more networks. The computing device may be a mobile device. As an example, a mobile device may include a cellular phone (e.g., a smartphone or standard cellular phone), a portable computer (e.g., laptop computer or tablet computer), a wearable device (e.g., watches, glasses, lenses), a personal digital assistant (PDA), and/or other like devices. In other non-limiting embodiments, the computing device may be a desktop computer or other non-mobile computer. Furthermore, the term "computer" may refer to any computing device that includes the necessary components to receive, process, and output data, and normally includes a display, a processor, a memory, an input device, and a network interface. An "interface" refers to a generated display, such as one or more graphical user interfaces (GUIs) with which a user may interact, either directly or indirectly (e.g., through a keyboard, mouse, etc.). Further, one or more computers, e.g., servers, or other computerized devices, directly or indirectly communicating in the network environment may constitute a "system".

Described herein are methods and systems for creating a heat sink design. In one embodiment, a user specifies property inputs for a heat sink, including physical dimensions, power level and thermal conductivity of the material, and the method or system calculates a predicted temperature, and gives the user the opportunity to see the results of these inputs, including how changing one or more of the inputs would affect the predicted temperature. In another embodiment, a user specifies a power level and a maximum temperature, and the method or system uses a standard design to calculate the physical dimensions of the heat sink, while also giving the user the opportunity to see the results of these inputs, including how changing one or more of the inputs would affect the predicted temperature. In each case, the method or system provides for a back- and-forth interaction between the user and the system, such that the user can review, accept, or change the heat sink design. This interactive communication between the user and the system may include an iterative process in which the user and the system communicate with one another until the system or method will generate a heat sink design having the desired properties, material and performance. Thus, the user may maintain control over the design, while still receiving recommendations from the system. Non-limiting embodiments allow for the user to receive a heat sink design and to select its method of manufacture.

The heat sink design described herein, is one having a diameter, a wall thickness, a number of fins, a fin height for each of the fins, a fin spacing (distance between the fins), an optional heat spreader plate having a plate thickness, and a material having a thermal conductivity. One or more of these variables may be fixed, and others may be variable. The heat sink is assumed to be adjacent to an electrical element having a input power level, and in an ambient air temperature, which may also be fixed. There may be several different materials having different thermal conductivity. These materials are most often aluminum, which has traditionally been used as a heat sink material, and there may also be one or more grades of thermally conductive thermoplastic, which may molded using one of the methods described herein. Finally, there is a temperature of the electrical element when it is in operation. This property may be calculated using a method or system described herein, or it may be inputted as a maximum temperature in which the electrical element may operate, and the heat sink design is calculated from that input, among others.

The method and systems described in detail in association with the Figures, are for a heat sink that is used in a circle domed reflector with a fixed diameter. However, additional geometries are easily accommodated but would require appropriate geometric input parameters for that geometry. Additional simulations using CFD would be needed, including validation with temperature measurements, and subsequent neural net model generation. Other geometries may be rectangular or square reflectors, or a series of circle, rectangular or square reflectors, which may be the same or different sizes to match any desired light design. In association with these additional geometries may be additional physical dimensions, such as height, width, and number of elements in a series, as well as differences in height, width, and diameter in the series.

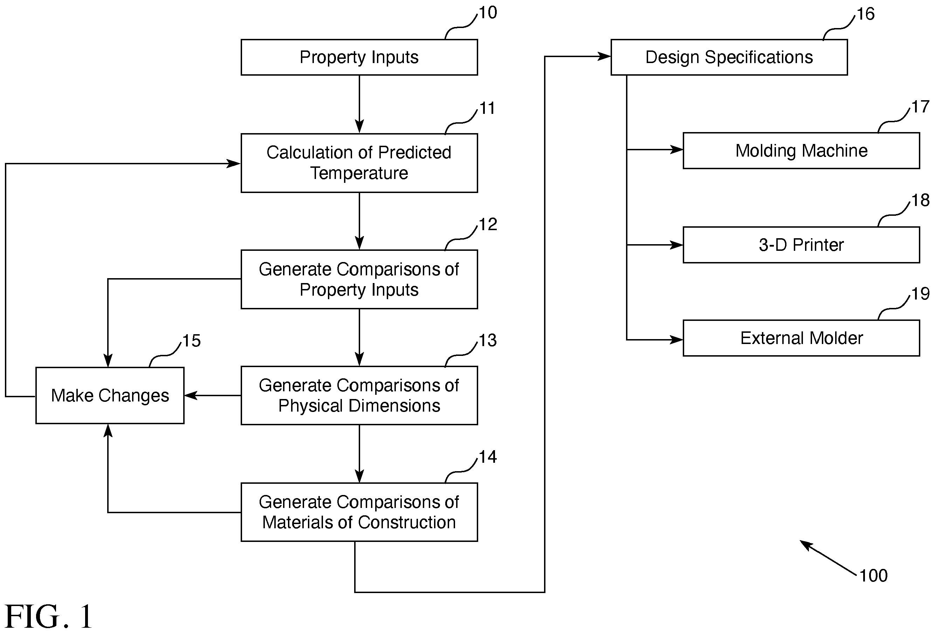

Referring to **FIG. 1**, a system **100** for creating a design for a heat sink is shown. The system **100** comprises the steps of inputting properties **10** from a computing device via a user interface. The properties may include property inputs, including target physical dimensions for the heat sink, a power level for an electrical element adjacent to the heat sink and the thermal conductivity of the material. The target physical dimensions of the heat sink may include the number of fins, fin height, fin spacing and heat spreader thickness. The heat spreader is optional, and its material of construction may be aluminum. The physical dimensions of diameter and wall thickness may also be included, or they may be fixed. The system then calculates the predicted temperature **11** of the electrical element based on the property inputs. Next, the system generates comparisons **12** of several of the property inputs, in which the system may generate a graph to show how much the temperature will rise or fall if that input were to change. The system may generate between zero and five comparisons, depending on the power level and the thermal conductivity of the material. With some combinations of these inputs, there may not be any choices left in the physical properties, and thus the number of comparison graphs may be fewer than in other combinations of inputs. Then, the system generates comparisons of physical dimensions **13** upon the temperature of the electrical element. In this comparison, it is shown how adjusting two physical dimensions at once can affect the temperature of the electrical element. Next, the system generates a comparison of using different materials **14** for the heat sink, where each of the materials has a different thermal conductivity, and how the choice of material may affect the predicted temperature of the electrical element. In each of these comparisons, the user may make changes **15** to the property inputs, and then the system recalculates the predicted temperature **11**. If the user is satisfied with the heat sink design such that no further changes are made, then the system creates design specifications **16**, which may further be sent to a molding machine **17** to create the heat sink. Other options include sending the design specifications **16** to a 3-D printer **18**, or to an external molder **19**.

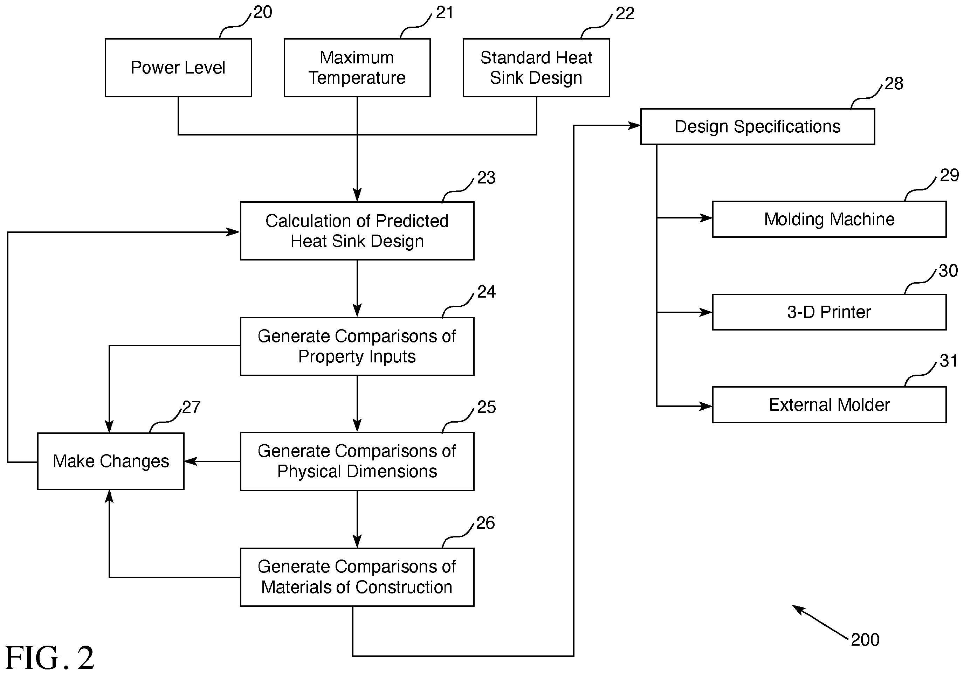

In another embodiment as shown in **FIG. 2**, a system **200** for creating a design for a heat sink is shown. The system **200** comprises the steps of inputting power level **20** of an electrical element adjacent to the heat sink, inputting the maximum operating temperature **21** of the electrical element, each inputting from a computing device via a user interface. The system also has as an input, the physical dimensions from a standard heat sink design **22**. The physical dimensions for the standard heat sink may include the number of fins, fin height, fin spacing and heat spreader thickness. The heat spreader is optional, and its material of construction may be aluminum. The physical dimensions of diameter and wall thickness may also be included, or they may be fixed. The system then calculates the predicted heat sink design **23**, wherein the predicted heat sink design has physical dimensions that are changed from the standard heat sink design **22**, to allow for the maximum operating temperature **21** of the electrical element, and the power level **20** of the electrical element based on the property inputs. In this embodiment, predicted heat sink design **23** also includes a choice of material of which to construct the heat sink. Next, the system generates comparisons **24** of several of the property inputs, in which the system may generate a graph to show how much the temperature will rise or fall if that input were to change. The system may generate between zero and five comparisons, depending on the power level and the maximum operating temperature of the electrical element. With some combinations of these inputs, there may not be any choices left in the physical properties, and thus the number of comparison graphs may be fewer than in other combinations of inputs. Then, the system generates comparisons of physical dimensions **25** upon the temperature of the electrical element. In this comparison, it is shown how adjusting two physical dimensions at once can affect the temperature of the electrical element. Next, the system generates a comparison of using different materials **26** for the heat sink, where each of the materials has a different thermal conductivity, and how the choice of material may affect the predicted temperature of the electrical element. In each of these comparisons, the user may make changes **27** to the property inputs, and then the system recalculates the predicted temperature **23**. If the user is satisfied with the heat sink design such that no further changes are made, then the system creates design specifications **28**, which may further be sent to a molding machine **29** to create the heat sink. Other options include sending the design specifications **28** to a 3-D printer **30**, or to an external molder **31**.

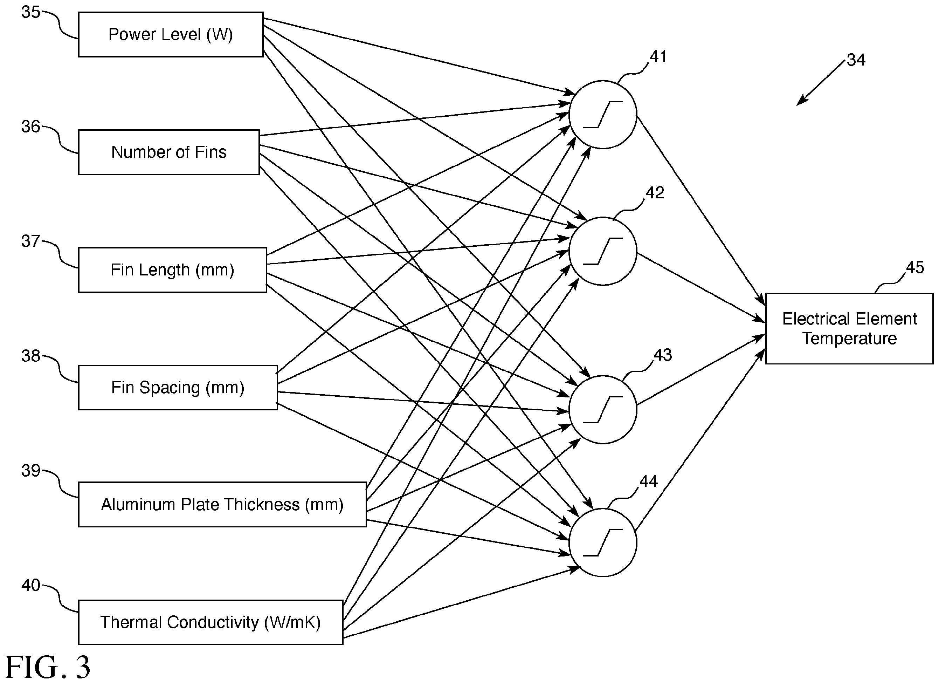

The calculation to arrive at a predicted temperature of the electrical element, or the predicted heat sink design, may rely upon a neural network. An example of a neural network this may be used in an embodiment of the present invention is shown in **FIG. 3**. A neural network is a machine learning technique loosely based on the networks in the human brain. Neural network models are used to predict heat sink temperatures generated from computational fluid dynamics (CFD) simulations. The model was built using input variables power level **35**, number of fins **36**, fin length **37**, fin spacing **38**, heat spreader thickness **39**, and thermal conductivity **40**. The material of construction of the heat spreader was assumed to be aluminum. The neural net consists of a one layer, four node model having first node **41**, second node **42**, third node **43** and fourth node **44**. Each of the first node, second node, third node and fourth node are used in the calculation of electrical element temperature **45**. A dataset was used to train and validate the models consisting of over 600 CFD simulations with varied settings for the input variables. For a small number of configurations, the electrical element temperature was determined using thermocouples and forward-looking infrared (FLIR) imaging. The data was compared to the CFD simulations to evaluate how well the CFD matched experimental results. Then, the electrical element temperature was measured using thermocouples and forward-looking infrared imaging, to confirm the accuracy of the model and the CFD simulations. The measurements confirmed that the CFD simulations were predicting an accurate temperate.

Equations below show the format of the neural net equations used to predict the electrical element temperature used in association with heat sinks. There is an equation for each node and the solutions from each node equation serve as inputs into Equation 5 which predicts the temperature of the electrical element.

(I)     $H1 = \text{Tanh}\,(0.5 * (B0 + (B1 * \text{Power Level}) + (B2 * \text{Thermal conductivity}) + (B3 * \text{Number of Fins}) + (B4 * \text{Fin Length}) + (B5 * \text{Heat Spreader Thickness}) + (B6 * \text{Fin Spacing})\,)\,)$

(II)     $H2 = \text{Tanh}\,(0.5 * (B0 + (B1 * \text{Power Level}) + (B2 * \text{Thermal conductivity}) + (B3 * \text{Number of Fins}) + (B4 * \text{Fin Length}) + (B5 * \text{Heat Spreader Thickness}) + (B6 * \text{Fin Spacing})\,)\,)$

(III)     $H3 = \text{Tanh}\,(0.5 * (B0 + (B1 * \text{Power Level}) + (B2 * \text{Thermal conductivity}) + (B3 * \text{Number of Fins}) + (B4 * \text{Fin Length}) + (B5 * \text{Heat Spreader Thickness}) + (B6 * \text{Fin Spacing})\,)\,)$

(IV)    H4 = Tanh (0.5 * (B0+ (B1* Power Level) + (B2 * Thermal conductivity) + (B3*Number of Fins) + (B4*Fin Length) + (B5* Heat Spreader Thickness) + (B6*Fin Spacing) ) )

(V)    Predicted Electrical Element Temperature = B0+ (B1* H1) + (B2* H2) + (B3* H3) + (B4* H4)

Referring again to FIG. 3, nodes **41-44** are functions of input variables **35-40.** Tanh is the hyperbolic tangent function. It has been found that including this hyperbolic tangent function in these formulas, increases the prediction of the electrical element temperature, by offering the predictive curves a better fit to the temperature function. Each of B0, B1, B2, B3, B4, B5 and B6 are coefficients in each equation, which may be different from one another, and different in each equation (I)-(V). These coefficients are determined using a neural net platform on the training set. The data generated by the CFD simulations described above is randomly split between a training set and a validation set. This approach has been found to avoid overfitting and to select a better predictive model. H1, H2, H3, and H4 are the output for each equation (I)-(IV). Equation V then uses outputs H1-H4 to solve for the predicted electrical element temperature. Coefficients B0-B5 in each equation, and consequently the resulting electrical element temperature, will vary slightly if the model is rerun because the training and validation sets are randomly selected.

The use of a neural network in these calculations offers considerable benefits over the prior art. It allows for a much faster prediction of the electrical element temperature, or the heat sink design, than would be done traditionally using CFD simulations.

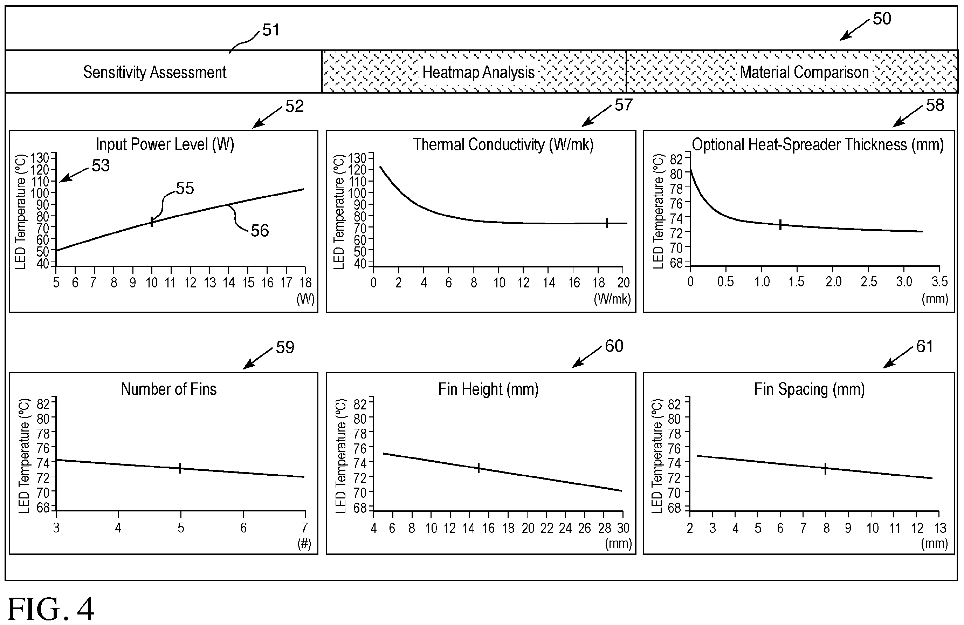

Referring to **FIGS. 4-6**, various non-limiting comparisons and user interfaces displayed on a computing device are shown for the system and method steps for creating a heat sink design. It will be appreciated that other arrangements of the user interface may be used for creating the heat sink design.

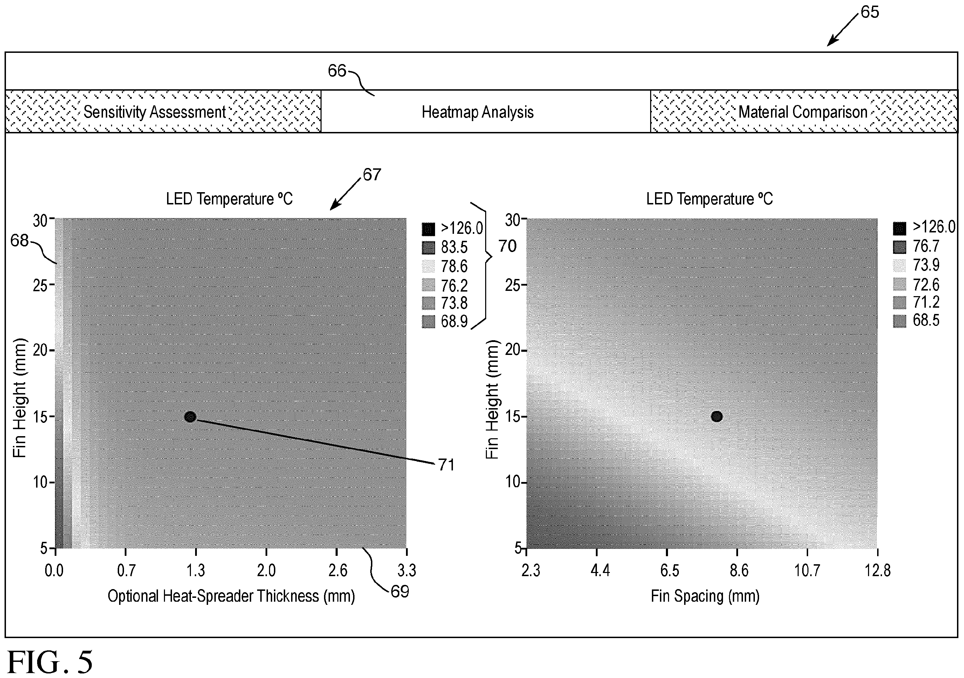

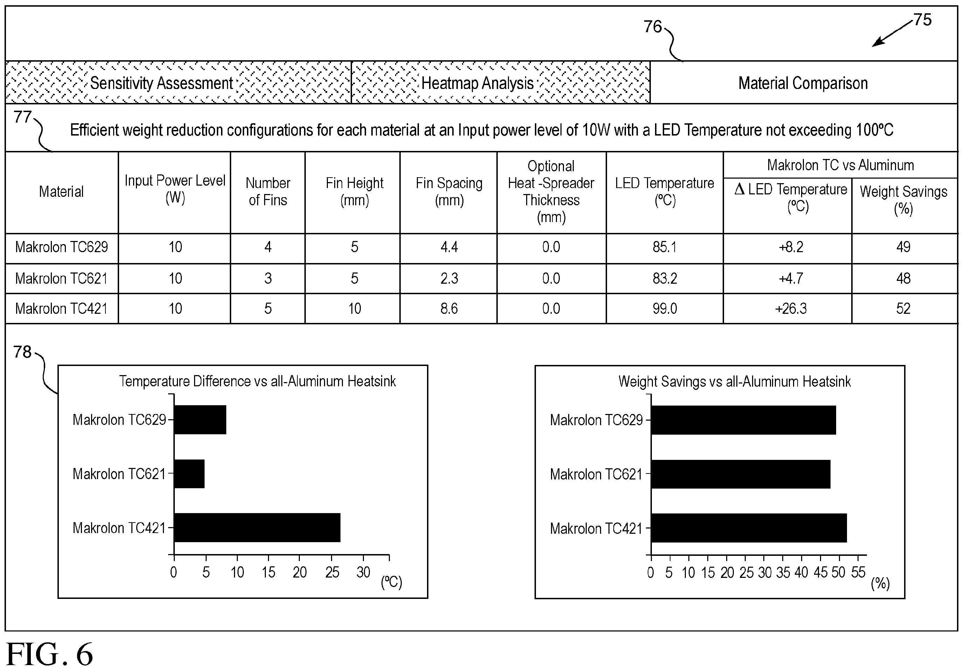

Referring to **FIG. 4**, a first comparison and user interface **50** is shown. This first comparison and user interface **50** may be generated after the user enters one or more physical dimensions, a power level for an electrical element, and a thermal conductivity of a heat sink material, and the temperature of the electrical element is calculated, using the system described herein. In another embodiment the first comparison and user interface **50** may be generated after the user enters a power level for the electrical element and a maximum acceptable application temperature for the electrical element, and a predicted heat sink design is calculated using a system or method steps as described herein. In another embodiment, the first comparison and user interface **50** may be generated following a change to one or more of the inputs, as described herein. A user may select first comparison and user interface **50** by selecting tab **51.** The first comparison and user interface **50** shows a sensitivity analysis of choosing one or more inputs, upon the electrical element temperature (shown as LED temperature), or upon another property. The comparison and user interface may be shown in table or graphical form. The various fields may include dropdown boxes, freeform fields, radio buttons, or any type of field commonly used in user interfaces. As shown in **FIG. 4**, the comparison and user interface may be shown as a series of line graphs such as comparison graph **52** showing how electrical element temperature **53** may vary when power level **54** is changed. In this embodiment, a user may slide graphical point **55** along curve **56** to arrive at a different power level **54** and electrical element temperature **53**. After this input is changed, the system may regenerate each of the comparison graphs, including graphs showing the effect of changing thermal conductivity **57**, heat spreader thickness **58**, number of fins **59**, fin height **60** and fin spacing **61**., and also including each of the comparisons shown in **FIGS. 5** and **6.**

Referring to **FIG. 5**, a second comparison and user interface **65** is shown. A user may select second comparison and user interface **65** by selecting tab **66.** Second comparison and user interface **65** may include one or more heat maps **67** showing the effect of a first property **68** and second property **69** upon electrical element temperature **70**, which may be shown in the heat map as a different color depending on what the predicted temperature would be, at that combination of property values as shown at the point in the heat map **71**. In this embodiment, a user may click and drag the point in the heat map to different location, changing two input properties at once, and then each of the comparison graphs may be updated, including heat map **67**, as well as the comparisons shown on **FIGS. 4** and **6.**

Referring to **FIG. 6**, a third comparison and user interface **75** is shown. A user may select third comparison and user interface **75** by selecting tab **76.** The third user comparison and interface **43** may include comparison table **77**, and one or more bar graphs **78**, each showing a comparison of using different materials upon the temperature of the electrical element, or a comparison the choice of material may have upon performance, such as weight savings compared to using aluminum. Table **77** may further include a dropdown with a list of possible materials to be selected. A user may select a different material, and then each of the table **77** and bar graphs **78** may be updated, as well as the comparisons shown on **FIGS. 4** and **5.**

Although the invention has been described in detail for the purpose of illustration based on what is currently considered to be the most practical and preferred embodiments, it is to be understood that such detail is solely for that purpose and that the invention is not limited to the disclosed embodiments, but, on the contrary, is intended to cover modifications and equivalent arrangements that are within the spirit and scope of the appended claims. For example, it is to be understood that the present invention contemplates that, to the extent possible, one or more features of any embodiment can be combined with one or more features of any other embodiment.

**Claims**

1. A method of creating a design for a heat sink, comprising:

   receiving, via a user interface, (i) at least one power level for an electrical element adjacent to the heat sink, and (ii) a maximum acceptable application temperature for the electrical element;
   calculating, with at least one processor, a modified heat sink design, based on the power level and maximum acceptable temperature inputted by the user, and also based on a standard heat sink design having standard physical dimensions, including a heat sink size, number of fins, fin height and fin spacing, wherein the modified heat sink design has physical dimensions that are changed from the standard design to allow for the input maximum temperature and power level, given a fixed heat sink size, and a thermal conductivity of a thermally conductive polymeric composition of which the heat sink is constructed;
   generating, with at least one processor, between zero and five first comparisons, each first comparison showing the impact of independently changing each of at least two physical dimensions, the power level inputted by the user, and at least one thermal conductivity of a thermally conductive polymeric composition of which the heat sink is constructed;
   generating, with at least one processor, a second comparison showing the effect of independently changing at least two physical dimensions upon the predicted temperature of the electrical element;
   generating, with at least one processor, a third comparison showing the effect of changing the material of construction upon the predicted temperature of the electrical element;
   allowing the user to change at least one of the physical dimensions, the power level, or the thermal conductivity after each of the above comparisons are generated;
   the user selecting a design for the heat sink having at least two physical dimensions and a material of construction, after being shown the predicted temperature of the electrical element via the user interface; and
   creating design specifications to manufacture the heat sink.

2. The method of claim 1, wherein the fixed heat sink size comprises a fixed heat sink diameter and a fixed heat sink thickness.

3. The method of any of the above, wherein the property inputs are selected from the group consisting of number of fins, fin height, fin spacing and heat spreader thickness.

4. The method of any of the above, wherein the property inputs comprise at least three target physical dimensions for a heat sink product, and the user selecting a design for a heat sink having at least three target physical dimensions and a material of construction.

5. The method of any of the above, wherein the calculating a predicted temperature of the electrical element uses a neural network model, prepared with a training set and validation set of prior CFD simulations, to optimize the proposed heat sink design based upon the property inputs, or to compare possible heat sink designs and choices of materials with the inputted design parameters to optimize the proposed heat sink design based on a predicted weight of the heat sink.

6. The method of any of the above, wherein each of the zero to five first comparisons are selected from the group consisting of tables and line graphs.

7. The system of any of the above, comprising generating, with at least one processor, three, four or five first comparisons, each first comparison showing the impact of independently changing each of the at least four property inputs and the resulting change to a predicted temperature of the electrical element.

8. The method of any of the above, wherein the second comparison is a heat map, and the predicted temperature of the electrical element is shown in a color in the heat map, the color changing with a change in predicted temperature.

9. The method of any of the above, further comprising:

   the user changing at least one property input; and
   recalculating, with at least one processor, based on the changed input.

10. The method of any of the above, wherein the user changes the at least one property input by moving a point in a line graph or a heat map of the first comparison or the second comparison to represent a change in the at least one property input.

11. The method of any of the above, further comprising:
    regenerating at least one of the first comparison, second comparison and third comparison, based upon the changed input.

12. The method of any of the above, further comprising sending the design specification to manufacture the heat sink to an injection molding machine, a 3-D printer, or an external molder.

13. A system of creating a design for a heat sink, comprising:

    a user interface, configured to receive at least four property inputs from a user, the property inputs comprising (i) at least two target physical dimensions for the heat sink, (ii) at least one power level for an electrical element adjacent to the heat sink, and (iii) at least one thermal conductivity of a thermally conductive polymeric composition, of which the heat sink is constructed;
    at least one processor configured to calculate a predicted temperature of the electrical element, based on the at least four property inputs;
    at least one processor configured to generate between zero and five first comparisons, each first comparison showing the impact of independently changing each of the at least four property inputs and the resulting change to a predicted temperature of the electrical element;
    at least one processor configured to generate a second comparison showing the effect of independently changing each of the at least two physical dimensions upon the predicted temperature of the electrical element;
    at least one processor configured to generate a third comparison showing the effect of changing the material of construction upon the predicted temperature of the electrical element;
    wherein the system is further configured to allow the user to change at least one of the at least four property inputs after each of the above comparisons are generated;
    wherein the system is further configured to allow the user to select a design for the heat sink having at least two target physical dimensions and a material of construction, after being shown the predicted temperature of the electrical element via the user interface; and
    wherein the system is further configured to allow the user to create design specifications to manufacture the heat sink.

FIG. 1

FIG. 2

20 Power Level

21 Maximum Temperature

22 Standard Heat Sink Design

23 Calculation of Predicted Heat Sink Design

24 Generate Comparisons of Property Inputs

25 Generate Comparisons of Physical Dimensions

26 Generate Comparisons of Materials of Construction

27 Make Changes

28 Design Specifications

29 Molding Machine

30 3-D Printer

31 External Molder

200

FIG. 3

Electrical Element Temperature 45

34

41 42 43 44

Power Level (W) 35
Number of Fins 36
Fin Length (mm) 37
Fin Spacing (mm) 38
Aluminum Plate Thickness (mm) 39
Thermal Conductivity (W/mK) 40

FIG. 4

FIG. 5

| Sensitivity Assessment | Heatmap Analysis | Material Comparison |

Efficient weight reduction configurations for each material at an Input power level of 10W with a LED Temperature not exceeding 100°C

| Material | Input Power Level (W) | Number of Fins | Fin Height (mm) | Fin Spacing (mm) | Optional Heat-Spreader Thickness (mm) | LED Temperature (°C) | Makrolon TC vs Aluminum | |
|---|---|---|---|---|---|---|---|---|
| | | | | | | | Δ LED Temperature (°C) | Weight Savings (%) |
| Makrolon TC629 | 10 | 4 | 5 | 4.4 | 0.0 | 85.1 | +8.2 | 49 |
| Makrolon TC621 | 10 | 3 | 5 | 2.3 | 0.0 | 83.2 | +4.7 | 48 |
| Makrolon TC421 | 10 | 5 | 10 | 8.6 | 0.0 | 99.0 | +26.3 | 52 |

Temperature Difference vs all-Aluminum Heatsink

Weight Savings vs all-Aluminum Heatsink

FIG. 6

Europäisches
Patentamt

European
Patent Office

Office européen
des brevets

# EUROPEAN SEARCH REPORT

Application Number

EP 22 21 3351

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KASZA K. ET AL: "Optimization of Pin Fin Heat Sink by Application of CFD Simulations and Doe Methodology with Neural Network Approximation", INTERNATIONAL JOURNAL OF APPLIED MECHANICS AND ENGINEERING, vol. 18, no. 2, 1 June 2013 (2013-06-01), pages 365-381, XP093070264, PL ISSN: 1734-4492, DOI: 10.2478/ijame-2013-0022 Retrieved from the Internet: URL:https://www.ijame-poland.com/pdf-16732 2-90482> | 1-13 | INV. G06F30/27 G06F30/28 ADD. G06F111/06 G06F119/08 |
| Y | * abstract; figures 4,8-10 * <br> * page 366, paragraph 3-4 * <br> * section 1.2 * <br> * page 370, paragraph 3 * <br> * page 371, last paragraph * <br> * section 3, par.1; table 2 * <br> * page 377, paragraph 1 * <br> * page 379, paragraph 2 * <br> * the whole document * | 9-11 | |

-----

-/--

**TECHNICAL FIELDS SEARCHED (IPC)**

G06F

The present search report has been drawn up for all claims

| Place of search | Date of completion of the search | Examiner |
|---|---|---|
| Munich | 3 August 2023 | Dapp, Wolfgang |

EPO FORM 1503 03.82 (P04C01)

page 1 of 3

Europäisches
Patentamt

European
Patent Office

Office européen
des brevets

**EUROPEAN SEARCH REPORT**

Application Number

EP 22 21 3351

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Fairclough Caty: "Optimizing Heat Sink Designs with a Simulation App", COMSOL Blog, 4 June 2015 (2015-06-04), XP093070265, Retrieved from the Internet: URL:https://www.comsol.com/blogs/optimizing-heat-sink-designs-with-a-simulation-app/ [retrieved on 2023-08-03] * page 1, paragraph 4 * * page 2, paragraph 2-3 * * page 3, paragraph 1-2 * * first figure on page 4 * * page 4, paragraph 2 * * the whole document * ----- | 9-11 | |
| X | POLAT MUHAMMED EMIN ET AL: "Artificial neural network model and multi-objective optimization of microchannel heat sinks with diamond-shaped pin fins", INTERNATIONAL JOURNAL OF HEAT AND MASS TRANSFER, vol. 194, 17 May 2022 (2022-05-17), page 123015, XP093070267, AMSTERDAM, NL ISSN: 0017-9310, DOI: 10.1016/j.ijheatmasstransfer.2022.123015 Retrieved from the Internet: URL:https://www.sciencedirect.com/science/article/pii/S0017931022004884?via%3Dihub> * abstract * * figures 1,7,12 * * the whole document * ----- -/-- | 1-13 | TECHNICAL FIELDS SEARCHED (IPC) |

The present search report has been drawn up for all claims

| Place of search | Date of completion of the search | Examiner |
|---|---|---|
| Munich | 3 August 2023 | Dapp, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XIANG XIONG ET AL: "Cooling performance optimization of liquid alloys GaInyin microchannel heat sinks based on back-propagation artificial neural network", APPLIED THERMAL ENGINEERING, PERGAMON, OXFORD, GB, vol. 127, 30 August 2017 (2017-08-30), pages 1143-1151, XP085209102, ISSN: 1359-4311, DOI: 10.1016/J.APPLTHERMALENG.2017.08.127 * abstract * * figures 4,5 * * section 4; table 6 * * the whole document * | 1-13 | |

TECHNICAL FIELDS
SEARCHED      (IPC)

The present search report has been drawn up for all claims

| Place of search | Date of completion of the search | Examiner |
|---|---|---|
| Munich | 3 August 2023 | Dapp, Wolfgang |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 3 of 3